# EUROPEAN PATENT SPECIFICATION

(11) **EP 3 944 644 B1**
(45) Date of publication and mention of the grant of the patent: **07.05.2025**
(21) Application number: 20787012.2
(22) Date of filing: 30.03.2020
(51) Int. Cl.: H04W 4/24, H04L 12/14, H04M 15/00

(54) **RESOURCE CHARGING METHOD, MEC MANAGEMENT SYSTEM AND MEC HOST**
RESSOURCENVERRECHNUNGSVERFAHREN, MEC-VERWALTUNGSSYSTEM UND MEC-HOST
PROCÉDÉ DE FACTURATION DE RESSOURCES, SYSTÈME DE GESTION MEC ET HÔTE MEC

(30) Priority: 11.04.2019 CN 201910289988
(43) Date of publication of application: 26.01.2022
(73) Proprietor: Huawei Technologies Co., Ltd., Shenzhen, Guangdong 518129 (CN)
(72) Inventor: FENG, Jiangping, Shenzhen, Guangdong 518129 (CN)
(74) Representative: Gill Jennings & Every LLP
(86) International application number: PCT/CN2020/082022
(87) International publication number: WO 2020/207280

(56) References cited:
- WO-A1-2016/134772
- WO-A1-2017/088501
- WO-A1-2018/223944
- CN-A- 108 111 320
- CN-A- 109 039 665
- CN-A- 109 495 857
- US-A1- 2018 359 617
- US-A1- 2020 107 166
- DEFANG LI ET AL: "Virtual network function placement and resource optimization in NFV and edge computing enabled networks", COMPUTER NETWORKS, 7 February 2018 (2018-02-07), pages 12 - 24, XP055572467, Retrieved from the Internet <URL:https://www.etsi.org/images/files/etsiwhitepapers/etsi_wp24_mec_deployment_in_4g_5g_final.pdf> [retrieved on 20190321], DOI: 10.1016/j.comnet.2019.01.036

## Description

### TECHNICAL FIELD

This application relates to the field of communications technologies, and in particular, to a resource charging method, a MEC management system, and a MEC host.

### BACKGROUND

Multi-access edge computing (multi-access edge computing, MEC) provides services and cloud-computing functions required by a user nearby by using a radio access network. After the cloud-computing function is deployed at a network edge, a carrier-grade service environment with high performance, a low delay, and high bandwidth can be created. This accelerates download of content, services, and applications in a network, so that a consumer enjoys better network experience.

Currently, a MEC architecture includes two parts: a MEC host and a MEC management system. The MEC host includes a MEC platform, a virtualization infrastructure, and a MEC application. The MEC platform mainly includes functions such as service registration/discovery and a common service. The MEC management system includes a MEC orchestrator (multi-access edge computing orchestrator), a MEC platform manager (MEC platform manager), a virtualization infrastructure manager (virtualization infrastructure manager), and the like. The MEC orchestrator is configured to maintain an overall view of all mobile edge hosts, available resources, and available MEC services in the MEC system, and trigger application instantiation and termination. The MEC platform manager is configured to manage the MEC platform, a life cycle of the MEC application, and a flow rule and a DNS rule of the MEC application. The virtualization infrastructure manager manages a virtual resource required by the MEC application. In the architecture, a tenant creates an MEC application in the architecture through application instantiation, and invokes, by using the MEC application, a service resource provided in the MEC platform. In addition, a system resource of the system is consumed when the MEC application runs.

However, the current MEC architecture does not support charging for a resource used by the MEC application created by the tenant in the architecture.

WO2018223944A1 relates to phone bill generation method, device, mobile edge platform and storage medium. Defang Li ET AL, "Virtual network function placement and resource optimization in NFV and edge computing enabled networks", Computer Networks, doi:10.1016/j.comnet.2019.01.036, (20180207), describes virtual network function placement and resource optimization in NFV and edge computing enabled networks.

### SUMMARY

Implementations of this application provide a resource charging method, an information collection method, a MEC management system, and a MEC host, to charge a resource consumed by a MEC application of a tenant.

The invention has been defined in the independent claims. Further specific technical features have been defined in the dependent claims.

According to a first aspect, an implementation of this application provides a resource charging method according to claim 1.

According to a second aspect, an implementation of this application provides a resource charging method according to claim 5.

According to a fifth aspect, an implementation of this application provides a MEC management system, and the MEC management system includes a processor, a memory, an input/output device, and a bus. The memory stores computer instructions, and when executing the computer instructions in the memory, the processor is configured to implement any implementation of the first aspect.

According to a sixth aspect, an implementation of this application provides a MEC host, and the MEC host includes a processor, a memory, an input/output device, and a bus. The memory stores computer instructions, when the processor executes the computer instructions in the memory, the memory stores the computer instructions, and when executing the computer instructions in the memory, the processor is configured to implement any implementation of the second aspect.

According to a seventh aspect, an implementation of this application provides a resource charging system, including the MEC management system in the fifth aspect and the MEC host in the sixth aspect.

According to a ninth aspect, an implementation of this application provides a computer-readable storage medium including instructions. When the instructions are run on a computer, the computer is enabled to implement any implementation of the first aspect or the second aspect.

It can be learned from the foregoing technical solutions that the implementations of this application have the following advantages:

It can be learned from the foregoing solutions, the MEC management system receives the resource usage information of the tenant sent by the MEC host, where the resource usage information is the information about the resource consumed by the MEC application created by the tenant; and the MEC management system sends the resource usage information to the charging system device, so that the charging system device charges, based on the resource usage information, the resource consumed by the MEC application of the tenant. Therefore, in the technical solutions of this application, the MEC management system receives the resource usage information of the tenant sent by the MEC host, and sends the resource usage information to the charging system device. The charging system device charges, based on the resource usage information, the resource consumed by the MEC application of the tenant.

### BRIEF DESCRIPTION OF DRAWINGS

FIG. 1 is a diagram of a multi-access edge computing system architecture according to an implementation of this application;
FIG. 2 is a schematic diagram of an implementation of a resource charging method according to an implementation of this application;
FIG. 3 is a schematic diagram of another implementation of a resource charging method according to an implementation of this application;
FIG. 4 is a schematic diagram of another implementation of a resource charging method according to an implementation of this application;
FIG. 5 is a schematic diagram of another implementation of a resource charging method according to an implementation of this application;
FIG. 6 is a schematic diagram of another implementation of a resource charging method according to an implementation of this application;
FIG. 7 is a schematic diagram of another implementation of a resource charging method according to an implementation of this application;
FIG. 8 is a schematic diagram of another implementation of a resource charging method according to an implementation of this application;
FIG. 9 is a schematic diagram of a structure of a MEC management system according to an implementation of this application;
FIG. 10 is a schematic diagram of a structure of a MEC host according to an implementation of this application;
FIG. 11 is a schematic diagram of another structure of a MEC management system according to an implementation of this application;
FIG. 12 is a schematic diagram of another structure of a MEC host according to an implementation of this application; and
FIG. 13 is a schematic diagram of a resource charging system according to an implementation of this application.

### DESCRIPTION OF IMPLEMENTATIONS

To make the objectives, technical solutions, and advantages of this invention clearer, the following further describes various implementations in detail with reference to the accompanying drawings. The implementations described below are not all claimed, they are included to help understanding the context of the invention. While the description refers to various implementations, the embodiments of the invention are those which comprise at least all the features of an independent claim. Any implementation which does not fall within the scope of the claims does not form part of the invention, but rather included as an illustrative example that is useful for understanding the invention.

Implementations of this application provide a resource charging method, a MEC management system, and a MEC host, to charge a resource consumed by a MEC application of a tenant.

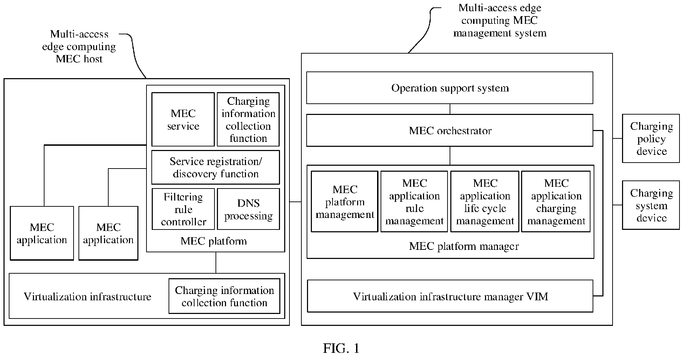

Refer to FIG. 1. FIG. 1 is a diagram of a multi-access edge computing system architecture according to this application. The system architecture mainly includes a MEC host, a MEC management system, a charging policy device, and a charging system device.

The MEC host includes a MEC platform, a MEC application, and a virtualization infrastructure. The MEC platform includes functions such as service registration/discovery, a common service (for example, a domain name service (domain name system, DNS)), resource usage information collection, and filtering rule controlling. The resource usage information collection function is used to collect statistics on usage information of a service resource used when the MEC application created by a tenant invokes a MEC service of the MEC platform, and report, to the MEC management system, the usage information of the service resource used by the tenant, trace a usage condition of a service resource charging quota that the charging system device sets for the tenant, and the like. The tenant may be understood as a user creating the MEC application in the system architecture, for example, a personal user or an enterprise user. The virtualization infrastructure provides a system resource (for example, a computing resource, a storage resource, and a network resource) for the MEC application, and the virtualization infrastructure further collects usage information of the system resource consumed by the MEC application.

The MEC management system includes an operation support system (operation support system, OSS), a MEC orchestrator, a MEC platform manager, and a virtualization infrastructure manager (virtualization infrastructure manager, VIM). The MEC platform manager includes a MEC platform management function, a MEC application rule management function, a MEC application life cycle management function, and a MEC application charging management function. The MEC application charging management function includes obtaining a resource charging quota of the tenant, collecting statistics on resource usage information of the tenant, tracing a usage condition of the resource charging quota of the tenant, periodically reporting the resource usage information of the tenant, and the like. In a possible implementation, the MEC platform manager is connected to the MEC platform in the MEC host, and the VIM is connected to the virtualization infrastructure in the MEC host.

The charging policy device is configured to store a charging policy of the tenant (for example, information such as charging by traffic, charging by duration, charging by a quantity of times that an API provided by the MEC service is invoked or no charging, a charging mode that is used to charge the tenant and that includes an online charging mode or an offline charging mode, a usage rate of the service resource of the MEC service provided by the MEC platform, and a usage rate of the system resource provided by the virtualization infrastructure), and interact with the OSS or the MEC orchestrator. The charging policy device may be connected to the OSS in the MEC management system, or the charging policy device may be connected to the MEC orchestrator. This is not specifically limited.

The charging system device is configured to: provide the resource charging quota for the tenant, charge, according to the charging policy of the tenant that is preset by the charging system device, a resource used by the tenant, and generate a charging data record. The charging system device is separately connected to the MEC platform manager and the VIM in the MEC management system. Optionally, the charging system device is connected to the MEC orchestrator, and is configured to obtain the charging policy of the tenant by using the MEC orchestrator.

It should be noted that the charging policy device in FIG. 1 may alternatively be integrated into the multi-access edge computing management system. This is not specifically limited in this application. In addition, the OSS, the MEC orchestrator, the MEC platform manager, and the VIM included in the multi-access edge computing management system may be integrated into one device as shown in FIG. 1, or may be a plurality of separate modules. This is not specifically limited in this application.

In addition, the system architecture shown in FIG. 1 shows only one MEC host (the MEC host includes the MEC platform) and one virtualization infrastructure. In an actual application, the system architecture may include a plurality of MEC hosts, and each MEC host may include one MEC platform and one virtualization infrastructure. The plurality of MEC hosts report usage information of service resources of MEC services invoked by MEC applications of different MEC platforms and system resources consumed by the MEC applications, so that the MEC management system may collect statistics on the service resources and the system resources that are used by the MEC applications and that are reported by the plurality of MEC hosts.

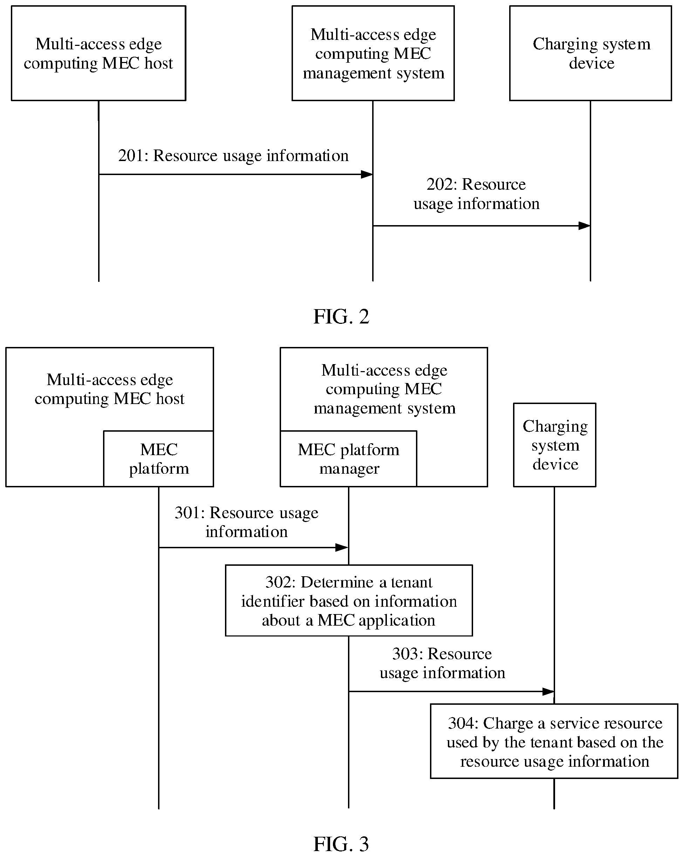

The following describes a resource charging method according to an implementation of this application from a perspective of an MEC management system. Refer to FIG. 2. An implementation of the resource charging method in this implementation of this application includes the following steps.

201: A MEC management system receives resource usage information sent by a MEC host.

The resource usage information is information about a resource consumed by a MEC application created by a tenant. The resource usage information includes a type of the resource, a size of the resource, a quantity of times that and duration in which the MEC application uses the resource, a usage start time of the resource, and a usage end time of the resource. The type of the resource is a service resource or a system resource, the service resource includes an API that is provided by a MEC service and that is invoked by the MEC application, and the system resource includes a computing resource, a network resource, and/or a storage resource consumed when the MEC application runs.

For example, in the multi-access edge computing system architecture shown in FIG. 1, the tenant creates the MEC application through application instantiation, and then the MEC application invokes the API provided by the MEC service of the MEC platform in the MEC host. To be specific, the service resource is consumed when the MEC application invokes the MEC service, and the service resource is the API provided by the MEC service. In addition, when the MEC application runs, the system resource (for example, the computing resource, the storage resource, and the network resource) of the system may be consumed. In this case, the MEC management system collects the resource usage information of the resource consumed by the MEC application of the tenant. For example, the resource usage information includes a quantity of times that the MEC application invokes the API provided by the MEC service in preset duration.

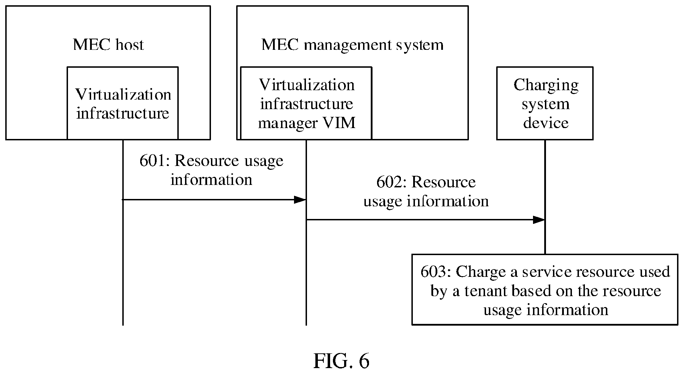

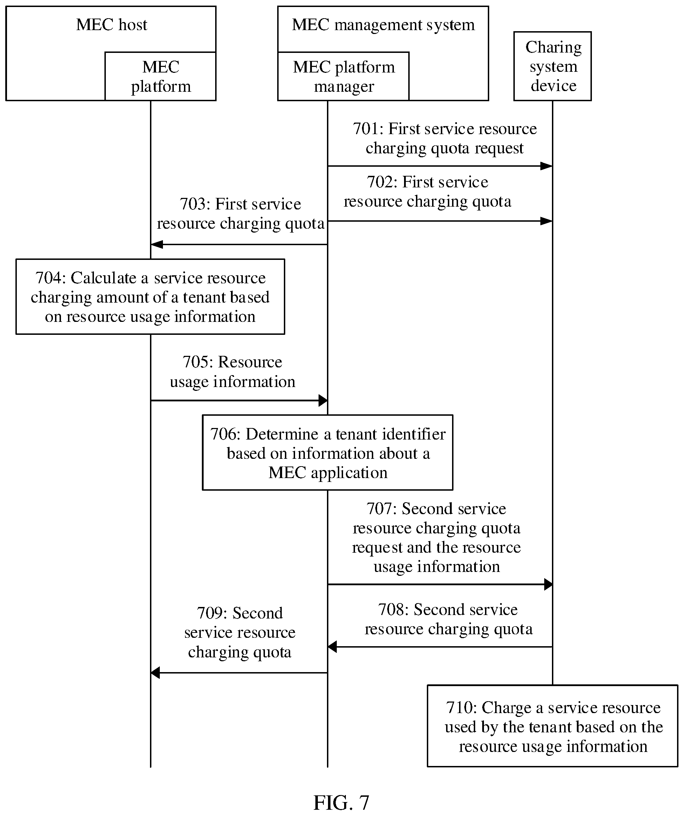

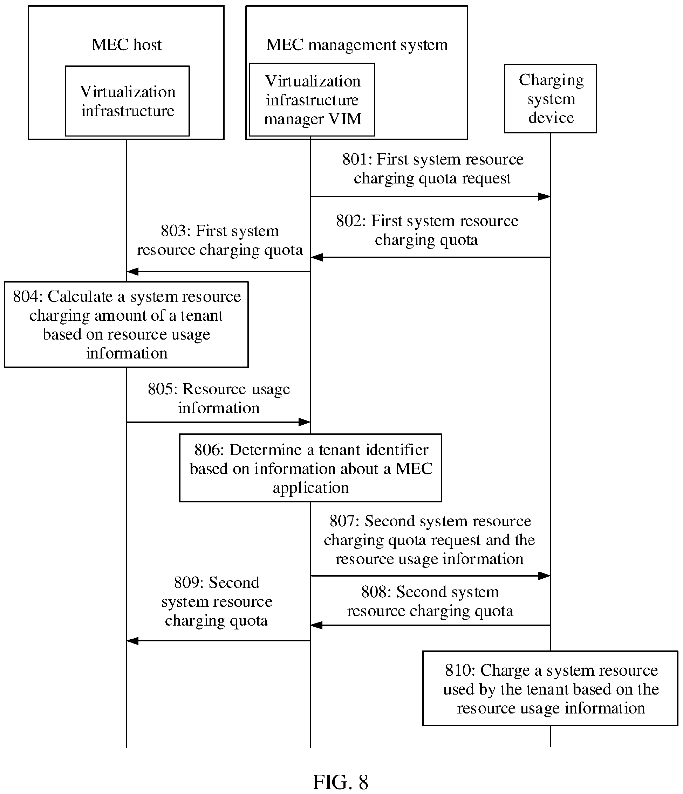

In this implementation, the MEC host collects the resource usage information of the tenant, and then reports the resource usage information to the MEC management system. A specific reporting mode is determined by a charging policy corresponding to the tenant, and the charging policy may include an online charging mode or an offline charging mode. Specifically, that the MEC host reports the resource usage information in the two charging modes is described in detail in an implementation shown in FIG. 3, an implementation shown in FIG. 6, an implementation shown in FIG. 7, and an implementation shown in FIG. 8.

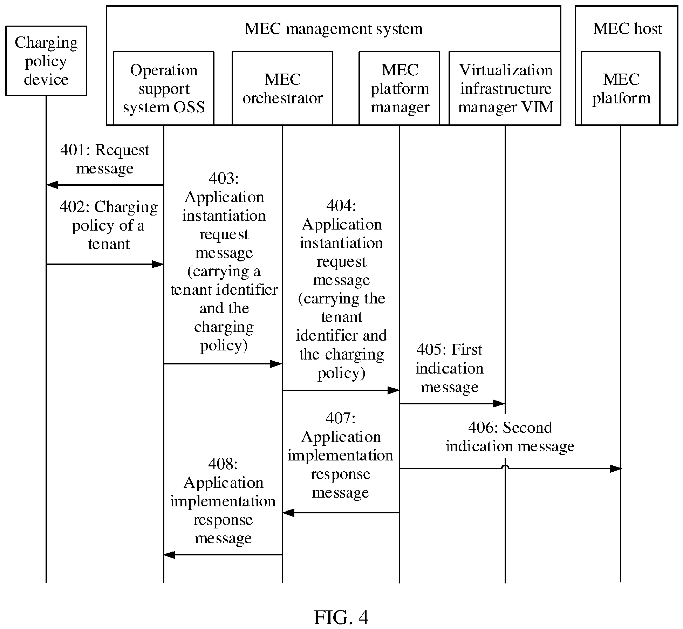

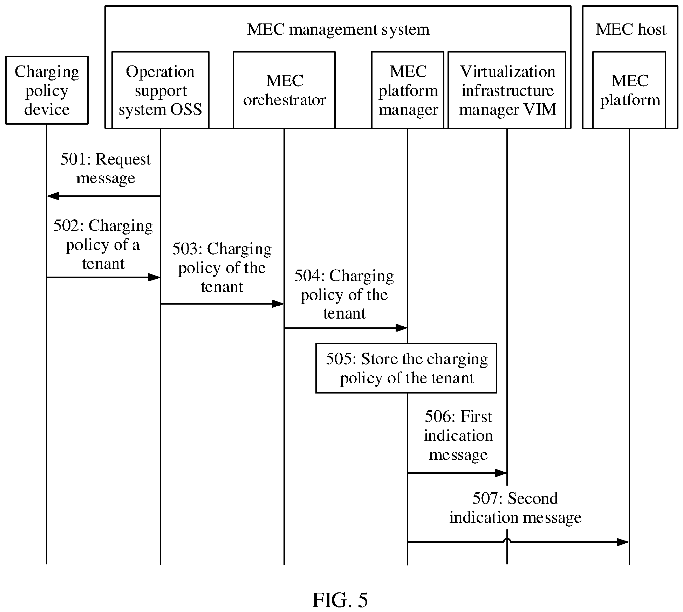

It should be noted that the charging policy may be delivered by the MEC management system to the MEC host, and may be specifically delivered by using an application instantiation request initiated by the tenant, or may be delivered by the MEC management system to the MEC host by using an independent procedure. This is not specifically limited in this application. For a specific process, refer to detailed description in an implementation shown in FIG. 4 and an implementation shown in FIG. 5.

202: The MEC management system sends the resource usage information to a charging system device.

The MEC management system sends the resource usage information to the charging system device. Then, the charging system device calculates a resource charging amount of the tenant based on the resource usage information, and generates a charging data record. For example, the resource usage information includes the quantity of times that the MEC application of the tenant invokes the API provided by the MEC service, and the charging system device calculates the resource charging amount of the tenant based on a preset API usage rate and the quantity of times that the API is invoked, where the API usage rate is an expense required each time the tenant invokes the API provided by the MEC service.

In this implementation of this application, the MEC management system receives the resource usage information of the tenant sent by the MEC host, where the resource usage information is information about the resource consumed by the MEC application created by the tenant; and the MEC management system may send the resource usage information to the charging system device, so that the charging system device charges, based on the resource usage information, the resource consumed by the MEC application of the tenant. Therefore, in the technical solution of this application, the MEC management system receives the resource usage information of the tenant sent by the MEC host, and sends the resource usage information to the charging system device. The charging system device charges, based on the resource usage information, the resource consumed by the MEC application of the tenant.

With reference to a specific implementation, the following describes the offline charging mode and the online charging mode in step 201 in FIG. 2.

FIG. 3 is a schematic diagram of a resource charging method according to an implementation of this application. In FIG. 3, a MEC host reports resource usage information of a tenant in an offline charging mode indicated by a charging policy. Refer to FIG. 3. The method includes the following steps.

301: The MEC host sends the resource usage information of the tenant to a MEC management system by using a MEC platform.

The resource usage information includes information about a MEC application, for example, an identifier of the MEC application. The resource usage information includes a type, a size, usage duration, a usage start time, a usage end time, and the like of a resource.

In this implementation, a charging policy of the tenant indicates to charge, in the offline charging mode, a service resource consumed by the tenant, and the charging policy carries a period in which the MEC host reports the resource usage information of the tenant. The MEC host sends, based on the period carried in the charging policy, the resource usage information of the service resource used by the tenant to the MEC management system by using the MEC platform. The service resource includes an API that is provided by a MEC service and that is invoked by the MEC application, and the like. The resource usage information includes a quantity of times that the MEC application invokes the API provided by the MEC service, duration in which the MEC application invokes the MEC service, or the like.

In this implementation, before the MEC host reports the resource usage information of the tenant to the MEC management system, the MEC management system delivers the charging policy to the MEC host, so that the MEC host reports the resource usage information to the MEC management system in a corresponding mode. The charging policy may be delivered in a plurality of modes. The following describes the modes by using an example.
1. The charging policy is delivered during application instantiation of the tenant. To be specific, an application instantiation request initiated by the tenant carries the charging policy of the tenant.
2. The MEC management system delivers the charging policy of the tenant by using an independent procedure.

The following describes in detail the two possible delivery modes by using specific implementations.

Refer to FIG. 4. FIG. 4 is a process in which a MEC management system delivers a charging policy of a tenant to a MEC host during tenant application instantiation. A specific process includes the following steps.

401: An OSS in the MEC management system sends a request message to a charging policy device.

The request message is used by the OSS to request the charging policy of the tenant from the charging policy device, and the request message carries a tenant identifier of the tenant.

402: The OSS in the MEC management system receives the charging policy of the tenant sent by the charging policy device.

The charging policy device determines the corresponding charging policy based on the tenant identifier of the tenant carried in the request message, and then sends the charging policy of the tenant to the OSS. The charging policy is used to indicate an online charging mode or an offline charging mode. When the charging policy of the tenant indicates the online charging mode, the charging policy includes a usage rate of a service resource and a usage rate of a system resource. When the charging policy indicates the offline charging mode, the charging policy includes a period in which the MEC host reports the resource usage information of the tenant. In addition, charging modes corresponding to different types of resources of a same tenant may be different, and the MEC host may be notified of a specific charging mode by using the charging policy. For example, for a service resource used by the tenant, the charging policy indicates to charge the service resource in the offline charging mode, and indicates the MEC host to report resource usage information of the service resource once an hour. For a system resource consumed by a MEC application of the tenant, the charging policy indicates to charge the system resource in the online charging mode, and carries a usage rate of the system resource and the like.

It should be noted that, as shown in FIG. 1, when the charging policy device is directly connected to the OSS in the MEC management system, the OSS may directly request the charging policy of the tenant from the charging policy device, and then the OSS directly receives the charging policy of the tenant sent by the charging policy device. When the charging policy device is directly connected to the MEC orchestrator in the MEC management system, the OSS requests the charging policy of the tenant from the charging policy device by using the MEC orchestrator, and then the OSS receives, by using the MEC orchestrator, the charging policy of the tenant sent by the charging policy device. Specifically, how the OSS obtains the charging policy of the tenant is determined based on an actual connection relationship between the charging policy device and the MEC management system. This is not limited in this application.

403: The MEC management system receives, by using the MEC orchestrator, an application instantiation request message sent by the OSS in the MEC management system.

The application instantiation request message carries the tenant identifier and the charging policy of the tenant.

404: The MEC management system sends the application instantiation request message to a MEC platform manager in the MEC management system by using the MEC orchestrator.

405: The MEC management system sends a first indication message to a VIM by using the MEC platform manager.

The MEC platform manager determines, based on the application instantiation request message, a charging policy for the system resource used by the tenant, and then the MEC platform manager sends the first indication message to the VIM. The first indication message carries the charging policy for the system resource, and is used by the VIM to set the charging policy for the tenant.

406: The MEC management system sends a second indication message to a MEC platform in the MEC host by using the MEC platform manager.

The MEC platform manager determines, based on the application instantiation request message, a charging policy for the service resource used by the tenant, and then the MEC platform manager sends the second indication message to the MEC platform in the MEC host. The second indication message carries the charging policy for the service resource, and is used by the MEC platform to set the charging policy for the tenant.

407: The MEC management system sends an application instantiation response message to the MEC orchestrator in the MEC management system by using the MEC platform manager.

The application instantiation response message is used to notify the OSS that application instantiation of the MEC application is completed.

408: The MEC management system sends the application instantiation response message to the OSS in the MEC management system by using the MEC orchestrator.

Refer to FIG. 5. FIG. 5 is a process in which a MEC management system delivers a charging policy of a tenant by using an independent procedure. A specific process includes the following steps.

501: An OSS in the MEC management system sends a request message to a charging policy device.

502: The OSS in the MEC management system receives the charging policy of the tenant sent by the charging policy device.

Step 501 and step 502 are similar to step 401 and step 402 in FIG. 4. Details are not described herein again.

503: The MEC management system sends the charging policy of the tenant to a MEC orchestrator in the MEC management system by using the OSS.

504: The MEC management system sends the charging policy of the tenant to a MEC platform manager in the MEC management system by using the MEC orchestrator.

505: The MEC management system stores the charging policy of the tenant by using the MEC platform manager.

When receiving the charging policy of the tenant, the MEC platform manager stores the charging policy of the tenant.

506: The MEC platform manager in the MEC management system sends a first indication message to a VIM in the MEC management system.

The first indication message carries a charging policy for a system resource of the tenant, and is used by the VIM to set the charging policy for the tenant.

507: The MEC platform manager in the MEC management system sends a second indication message to a MEC platform in a MEC host.

The second indication message carries a charging policy for a service resource of the tenant, and is used by the MEC platform to set the charging policy for the tenant.

In the implementation shown in FIG. 5, the charging policy may be delivered by using the independent procedure during application instantiation. To be specific, in a mode in which the MEC management system delivers the charging policy by using the independent procedure, when the MEC platform manager receives an application instantiation request message, the MEC platform manager may first determine whether a charging policy of the tenant corresponding to a tenant identifier carried in the application instantiation request message exists locally. If the charging policy of the tenant exists, the MEC management system does not need to request the charging policy from the charging policy device, and directly performs step 505 to step 507, in other words, step 501 to step 504 are not performed. If the charging policy of the tenant does not exist, the MEC management system performs the procedure shown in FIG. 5.

302: The MEC management system determines the tenant identifier of the tenant based on information about the MEC application by using the MEC platform manager.

The resource usage information includes the information about the MEC application. For example, it can be learned from the implementation in FIG. 4 that the application instantiation request carries the tenant identifier of the tenant, and the MEC platform manager determines a correspondence between the MEC application, the tenant identifier, and the charging policy of the tenant. Therefore, the MEC platform manager may determine the tenant identifier of the tenant based on the information about the MEC application carried in the resource usage information.

303: The MEC management system sends the resource usage information to a charging system device by using the MEC platform manager.

The MEC platform manager sends, to the charging system device, the resource usage information of the service resource used by the tenant. It should be noted that, when there are a plurality of MEC platforms in the system architecture, the MEC platform manager receives resource usage information that is of service resources used by MEC applications of the tenant and that is sent by the plurality of MEC platforms. In this case, the MEC platform manager needs to collect statistics on the resource usage information of the tenant reported by the plurality of MEC platforms, to subsequently report, to the charging system device, the resource usage information of the service resources used by the MEC applications of the tenant in a period, so that the charging system device charges the service resources used by the tenant.

304: The charging system device charges, based on the resource usage information, the service resource used by the tenant.

For example, the charging system device charges the tenant based on the resource usage information and a usage rate of the service resource that is preset by the charging system device. The usage rate of the service resource may be determined based on a level of the tenant. For example, a VIP tenant has a lower usage rate than a common tenant. Alternatively, all tenants may use a same usage rate. This is not specifically limited in this application. For example, the resource usage information includes a quantity of times that the MEC application of the tenant invokes an API provided by a MEC service. The charging system device determines a usage rate at which the tenant invokes the API provided by the MEC service once, and then multiplies the usage rate by the quantity of times that the MEC application invokes the API provided by the MEC service, to obtain a charging amount of the tenant.

In this implementation, in the system architecture, the system resource consumed by the tenant may alternatively be charged in an offline charging mode. A specific charging process is similar to a process of charging the service resource used by the tenant. The following provides description by using an implementation shown in FIG. 6. Refer to FIG. 6. The method includes the following steps.

601: A MEC host sends resource usage information of a system resource of the tenant to a VIM in a MEC management system by using a virtualization infrastructure.

The resource usage information includes information about a MEC application, for example, an identifier of the MEC application. The resource usage information includes a type, a size, usage duration, a usage start time, a usage end time, and the like of the resource.

In this implementation, the MEC host determines, based on a charging policy delivered by the MEC management system, that a charging system device charges the system resource used by the tenant in an offline charging mode. To be specific, the charging policy indicates the offline charging mode, and carries a period in which the MEC host reports the resource usage information of a service resource of the tenant. For specific delivery of the charging policy, refer to the implementations shown in FIG. 4 and FIG. 5. Details are not described herein again. The MEC host collects the resource usage information of the system resource consumed when the MEC application of the tenant runs. For example, the system resource includes a computing resource, a storage resource, and a network resource consumed when the MEC application runs, and the resource usage information includes usage duration of the system resource when the MEC application runs. Then, the MEC host sends, based on the period indicated in the charging policy, the resource usage information of the system resource consumed by the MEC application of the tenant to the VIM in the MEC management system by using the virtualization infrastructure.

602: The MEC management system sends the resource usage information to the charging system device by using the VIM.

It should be noted that, when there are a plurality of MEC platforms in the system architecture, each MEC platform corresponds to one virtualization infrastructure. When receiving resource usage information that is of system resources consumed by MEC applications of the tenant and that is sent by a plurality of virtualization infrastructures, the VIM collects statistics on the resource usage information reported by the plurality of virtualization infrastructures, to determine the resource usage information of the system resources used by the tenant in the period, so that the charging system device charges the system resources used by the tenant.

603: The charging system device charges, based on the resource usage information, the system resource used by the tenant.

For example, the charging system device charges the system resource used by the tenant based on the resource usage information and a usage rate of the system resource that is preset by the charging system device. The usage rate of the system resource may be determined based on a level of the tenant. For example, a VIP tenant has a lower usage rate than a common tenant. Alternatively, all tenants may use a same usage rate. This is not specifically limited in this application.

For example, the resource usage information includes the usage duration of the system resource used by the MEC application of the tenant. The charging system device may determine a usage rate at which the tenant uses the system resource each hour, and then multiplies the usage rate by the usage duration of the system resource used by the MEC application, to obtain a charging amount of the tenant. For another example, the resource usage information further includes a size of the system resource used by the MEC application. Then, the charging system device determines a usage rate at which each time the tenant uses each megabit of system resource, and multiplies the usage rate by the size of the system resource used by the MEC application, to obtain a charging amount of the tenant.

In this implementation of this application, the MEC management system receives the resource usage information of the tenant sent by the MEC host, where the resource usage information is information about the resource consumed by the MEC application created by the tenant; and then the MEC management system sends the resource usage information to the charging system device, so that the charging system device charges, based on the resource usage information, the resource consumed by the MEC application of the tenant. Therefore, in the technical solution of this application, the MEC management system receives the resource usage information of the tenant sent by the MEC host, and sends the resource usage information to the charging system device. The charging system device charges, based on the resource usage information, the resource consumed by the MEC application of the tenant.

FIG. 7 is a schematic diagram of a resource charging method according to an implementation of this application. In FIG. 7, a MEC host reports, in an online charging mode, resource usage information of a service resource consumed by a MEC application of a tenant, so that a charging system device charges, in the online charging mode, the service resource consumed by the tenant. Refer to FIG. 7. The method includes the following steps.

701: A MEC management system sends a first service resource charging quota request of the tenant to a charging system device by using a MEC platform manager.

The MEC management system determines that a charging policy of the tenant indicates the online charging mode, and the MEC management system sends the first service resource charging quota request of the tenant to the charging system device by using the MEC platform manager.

702: The MEC management system receives, by using the MEC platform manager, a first service resource charging quota sent by the charging system device.

The MEC platform manager receives the first service resource charging quota that the charging system device sets for the tenant.

703: The MEC management system sends the first service resource charging quota to a MEC platform in a MEC host by using the MEC platform manager.

It should be noted that the MEC platform manager may deliver the first service resource charging quota to the MEC platform and the charging policy simultaneously, or may first deliver the charging policy and then deliver the first service resource charging quota to the MEC platform. This is not specifically limited herein.

704: The MEC host calculates a service resource charging amount of the tenant based on the resource usage information by using the MEC platform.

It can be learned from the foregoing implementations in FIG. 4 and FIG. 5 that before the MEC host reports the resource usage information of the tenant, the MEC management system delivers the charging policy to the MEC host, where the charging policy carries a usage rate of the service resource used by the tenant, for example, an expense corresponding to each time the MEC application of the tenant invokes an API provided by a MEC service, or an expense corresponding to a service resource used by the MEC application of the tenant each hour, so that the MEC host may report the resource usage information of the tenant according to the charging policy. The MEC host collects, by using the MEC platform, the resource usage information of the service resource consumed when the MEC application of the tenant invokes the MEC service. Then, the MEC platform calculates the service resource charging amount of the tenant based on the resource usage information of the service resource of the tenant and the usage rate of the service resource used by the tenant.

For example, the resource usage information includes a quantity of times that the MEC application of the tenant invokes the API provided by the MEC service. Then, the MEC platform in the MEC host determines a usage rate at which the API is invoked once, and multiplies the usage rate by the quantity of times that the API is invoked, to obtain the service resource charging amount. For another example, the resource usage information includes usage duration of the service resource used by the tenant. The MEC platform determines a usage rate corresponding to a service resource used by the tenant each hour, and multiplies the usage duration by the usage rate, to obtain the service resource charging amount of the tenant.

705: When a service resource charging difference between the service resource charging amount and the first service resource charging quota is less than a preset threshold, the MEC host sends the resource usage information of the service resource of the tenant to the MEC platform manager in the MEC management system by using the MEC platform.

The MEC platform determines the service resource charging difference based on the service resource charging amount and the first service resource charging quota that the charging system device sets for the tenant. When the service resource charging difference is less than the preset threshold, the MEC platform sends the resource usage information of the service resource of the tenant to the MEC platform manager in the MEC management system.

706: The MEC management system determines a tenant identifier of the tenant based on information about the MEC application by using the MEC platform manager.

Step 706 is similar to step 302 in FIG. 3. Details are not described herein again. When receiving the resource usage information sent by the MEC host, the MEC management system may determine that the first service resource charging quota of the tenant is about to be exhausted.

707: The MEC management system sends a second service resource charging quota request and the resource usage information to the charging system device by using the MEC platform manager.

The MEC platform manager generates the second service resource charging quota request for the tenant, and sends the second service resource charging quota request and the resource usage information of the service resource of the tenant to the charging system device. The second service resource charging quota request is used by the MEC management system to request the charging system device to allocate a new service resource charging quota to the tenant.

708: The MEC management system receives, by using the MEC platform manager, a second service resource charging quota sent by the charging system device.

The charging system device allocates the second service resource charging quota to the tenant based on the second service resource charging quota request, and sends the second service charging quota to the MEC platform manager in the MEC management system.

709: The MEC management system sends the second service resource charging quota to the MEC host by using the MEC platform manager.

The MEC platform manager sends the second service resource charging quota to the MEC platform in the MEC host, where the second service resource charging quota is used by the MEC platform to set the second service resource charging quota for the tenant. Therefore, in duration of a next period, when a service resource charging difference between the service resource charging amount of the tenant and the second service resource charging quota is less than the preset threshold, the MEC platform reports the resource usage information of the service resource of the tenant to the MEC platform manager again.

710: The charging system device charges, based on the resource usage information, the service resource used by the tenant.

Step 703 is similar to step 304 in FIG. 3. Details are not described herein again.

In this implementation, in the system architecture, a system resource consumed by the tenant may alternatively be charged in the online charging mode. A specific charging process is similar to a process of charging the service resource used by the tenant. The following provides description by using an implementation shown in FIG. 8. Refer to FIG. 8. The method includes the following steps.

801: A MEC management system sends a first system resource charging quota request to a charging system device by using a VIM.

The MEC management system determines that a charging policy of the tenant indicates an online charging mode, and the MEC management system may send the first system resource charging quota request of the tenant to the charging system device by using a MEC platform manager.

802: The MEC management system receives, by using the VIM, a first system resource charging quota sent by the charging system device.

The VIM receives the first system resource charging quota that the charging system device sets for the tenant.

803: The MEC management system sends the first system resource charging quota to a virtualization infrastructure in a MEC host by using the VIM.

It should be noted that the MEC platform manager may deliver the first system resource charging quota to a MEC platform and the charging policy simultaneously, or may first deliver the charging policy and then deliver the first service resource charging quota to the MEC host. This is not specifically limited in this application.

804: The MEC host calculates a system resource charging amount of the tenant based on resource usage information by using the virtualization infrastructure.

It can be learned from the foregoing implementations in FIG. 4 and FIG. 5 that before the MEC host reports the resource usage information of the tenant, the MEC management system delivers the charging policy to the MEC host, where the charging policy carries a usage rate of a system resource used by the tenant, for example, an expense corresponding to a system resource used by a MEC application of the tenant each hour, or an expense corresponding to each megabit of system resource used by a MEC application of the tenant, so that the MEC host reports the resource usage information of the system resource used by the tenant in the online charging mode. The virtualization infrastructure in the MEC host collects the resource usage information of the system resource used when the MEC application of the tenant runs, and the virtualization infrastructure calculates the system resource charging amount of the tenant based on the resource usage information and the usage rate that is of the system resource used by the tenant and that is indicated by the charging policy.

805: When a difference between the system resource charging amount and the first system resource charging quota is less than a preset threshold, the MEC host sends the resource usage information of the system resource of the tenant to the VIM in the MEC management system by using the virtualization infrastructure.

The virtualization infrastructure determines the system resource charging difference based on the system resource charging amount and the first system resource charging quota that the charging system device allocates for the tenant. When the system resource charging difference is less than the preset threshold, the virtualization infrastructure sends the resource usage information of the system resource of the tenant to the VIM in the MEC management system.

806: The MEC management system determines, by using the VIM, a tenant identifier of the tenant based on information about the MEC application carried in the resource usage information.

807: The MEC management system sends a second system resource charging quota request and the resource usage information of the system resource used by the tenant to the charging system device by using the VIM.

808: The charging system device sends a second system resource charging quota to the VIM in the MEC management system.

809: The MEC management system sends the second system resource charging quota to the virtualization infrastructure in the MEC host by using the VIM.

810: The charging system device charges, based on the resource usage information, the system resource used by the tenant.

Step 806 to step 810 are similar to step 706 to step 710 in FIG. 7. Details are not described herein again.

In this implementation of this application, the MEC management system receives the resource usage information of the tenant sent by the MEC host, where the resource usage information is information about the resource consumed by the MEC application created by the tenant; and then the MEC management system sends the resource usage information to the charging system device, so that the charging system device charges, based on the resource usage information, the resource consumed by the MEC application of the tenant. Therefore, in the technical solution of this application, the MEC management system receives the resource usage information of the tenant sent by the MEC host, and sends the resource usage information to the charging system device. The charging system device charges, based on the resource usage information, the resource consumed by the MEC application of the tenant.

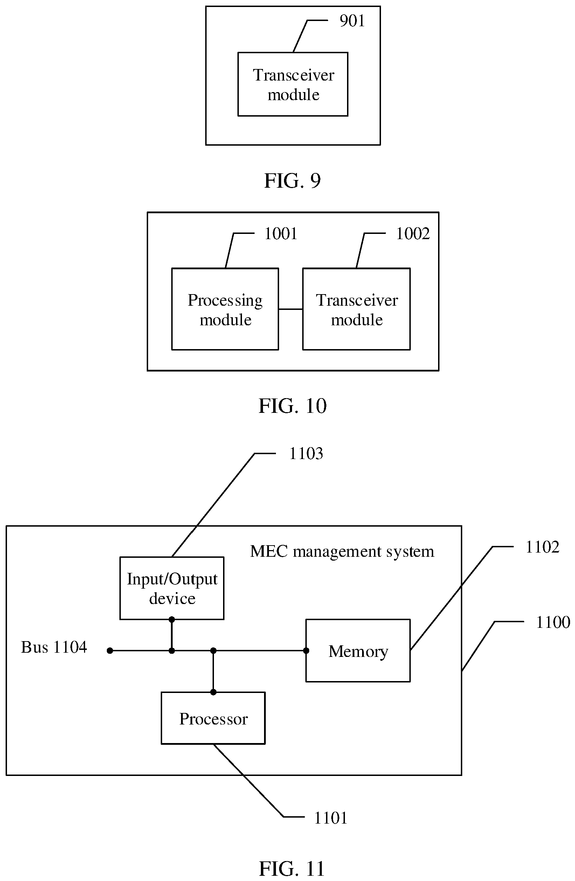

The following describes a MEC management system according to an implementation of this application. FIG. 9 shows an implementation of a MEC management system according to an implementation of this application. The MEC management system may be configured to perform steps performed by the MEC management system in the implementations shown in FIG. 2, FIG. 3, FIG. 4, FIG. 5, FIG. 6, FIG. 7, and FIG. 8. For details, refer to related description in the foregoing method implementations.

The MEC management system includes a transceiver module 901.

The transceiver module 901 is configured to receive resource usage information of a tenant sent by a MEC host, where the resource usage information is information about a resource consumed by a MEC application created by the tenant.

The transceiver module 901 is configured to send the resource usage information to a charging system device, where the resource usage information is used by the charging system device to charge the resource consumed by the MEC application of the tenant.

The resource usage information includes a type, a size, a quantity of times of usage, usage duration, a usage start time, and a usage end time of the resource.

The type of the resource is a service resource or a system resource, the service resource includes an API that is provided by a MEC service and that is invoked by the MEC application, and the system resource includes a computing resource, a network resource, and/or a storage resource consumed when the MEC application runs. The resource usage information includes a quantity of times that the MEC application invokes the API provided by the MEC service, and the quantity of times that the API is invoked is used by the charging system device to calculate, based on a preset API usage rate, a charging amount of a service resource used by the tenant.

In another possible implementation, the transceiver module 901 is further configured to:
receive a charging policy of the tenant sent by a charging policy device; and
send an indication message to the MEC host, where the indication message carries the charging policy of the tenant.

In another possible implementation, the transceiver module 901 is further configured to:
obtain a charging policy of the tenant by using an application instantiation request message of the tenant; and
send an indication message to the MEC host, where the indication message carries the charging policy of the tenant.

In another possible implementation, the charging policy indicates an online charging mode, the charging policy carries a usage rate of a resource used by the tenant, and the usage rate is used by the MEC host to calculate a resource charging amount of the tenant. The transceiver module 901 is further configured to:
send, to the MEC host, a first resource charging quota that the charging system device sets for the tenant.

The transceiver module 901 is specifically configured to:
when a resource charging difference between the resource charging amount of the tenant and the first resource charging quota is less than a preset threshold, receive the resource usage information of the tenant sent by the MEC host.

In another possible implementation, the transceiver module 901 is further configured to:
send a request message to the MEC host, where the request message is a message that the MEC management system requests a resource charging quota for the tenant again;
receive a second resource charging quota that the MEC host allocates to the tenant; and
send the second resource charging quota to the MEC host.

In another possible implementation, the charging policy indicates an offline charging mode, and the charging policy carries a period in which the MEC host reports the resource usage information. The transceiver module 901 is specifically configured to:
receive, based on the period, the resource usage information of the tenant sent by the MEC host.

In this implementation of this application, the transceiver module 901 receives the resource usage information of the tenant sent by the MEC host, where the resource usage information is information about the resource consumed by the MEC application created by the tenant; and the transceiver module 901 sends the resource usage information to the charging system device, so that the charging system device charges, based on the resource usage information, the resource consumed by the MEC application of the tenant. Therefore, in the technical solution of this application, the transceiver module 901 receives the resource usage information of the tenant sent by the MEC host, and sends the resource usage information to the charging system device. The charging system device charges, based on the resource usage information, the resource consumed by the MEC application of the tenant.

The following describes a MEC host according to an implementation of this application. FIG. 10 shows an implementation of a MEC host according to an implementation of this application. The MEC host may be configured to perform steps performed by the MEC host in the implementations shown in FIG. 2, FIG. 3, FIG. 4, FIG. 5, FIG. 6, FIG. 7, and FIG. 8. For details, refer to related description in the foregoing method implementations.

The MEC host includes a processing module 1001 and a transceiver module 1002.

The processing module 1001 is configured to collect resource usage information of a tenant, where the resource usage information is information about a resource consumed by a MEC application created by the tenant.

The transceiver module 1002 is configured to send the resource usage information to a MEC management system, so that the MEC management system sends the resource usage information to a charging system device, and the charging system device charges the resource used by the tenant.

The resource usage information includes a type, a size, a quantity of times of usage, usage duration, a usage start time, and a usage end time of the resource.

The type of the resource is a service resource or a system resource, the service resource includes an API that is provided by a MEC service and that is invoked by the MEC application, and the system resource includes a computing resource, a network resource, and/or a storage resource consumed when the MEC application runs; and the resource usage information includes a quantity of times that the MEC application invokes the API provided by the MEC service, and the quantity of times that the API is invoked is used by the charging system device to calculate, based on a preset API usage rate, a charging amount of a service resource used by the tenant.

In another possible implementation, the transceiver module 1002 is further configured to:
receive an indication message sent by the MEC management system, where the indication message carries a charging policy of the tenant, and the charging policy is used by the transceiver module 1002 to report the resource usage information to the MEC management system.

In another possible implementation, the charging policy indicates an online charging mode, and the charging policy carries a usage rate of a resource used by the tenant. The transceiver module 1002 is further configured to:
receive a first resource charging quota that the charging system device sets for the tenant and that is sent by the MEC management system.

The processing module 1001 is further configured to:
calculate a resource charging amount of the tenant based on the resource usage information and the usage rate; and
compare the resource charging amount with the first resource charging quota, to obtain a resource charging difference.

The processing module 1001 is specifically configured to:
when the resource charging difference is less than or equal to a preset threshold, send the resource usage information to the MEC management system.

In another possible implementation, the transceiver module 1002 is further configured to:
receive a second resource charging quota sent by the MEC management system, where the second resource charging quota is used by the transceiver module 1002 to report the resource usage information of the tenant to the MEC management system again.

In another possible implementation, the charging policy indicates an offline charging mode, and the charging policy carries a period in which the MEC host reports the resource usage information. The transceiver module 1002 is specifically configured to:
send the resource usage information to the MEC management system based on the period.

In this implementation of this application, the processing module 1001 collects the resource usage information of the tenant, and the transceiver module 1002 sends the resource usage information to the MEC management system, so that when receiving the resource usage information, the MEC management system may forward the resource usage information to the charging system device, and the charging system device charges the resource consumed by the MEC application of the tenant.

This application further provides a MEC management system 1100. FIG. 11 shows an implementation of a MEC management system according to an implementation of this application. The MEC management system may be configured to perform steps performed by the MEC management system in the implementations shown in FIG. 2, FIG. 3, FIG. 4, FIG. 5, FIG. 6, FIG. 7, and FIG. 8. For details, refer to related description in the foregoing method implementations.

The MEC management system 1100 includes a processor 1101, a memory 1102, an input/output device 1103, and a bus 1104.

In a possible implementation, the processor 1101, the memory 1102, and the input/output device 1103 are separately connected to the bus 1104, and the memory stores computer instructions.

The transceiver module 901 in the foregoing implementation may be specifically the input/output device 1103 in this implementation. Therefore, a specific implementation of the input/output device 1103 is not described again.

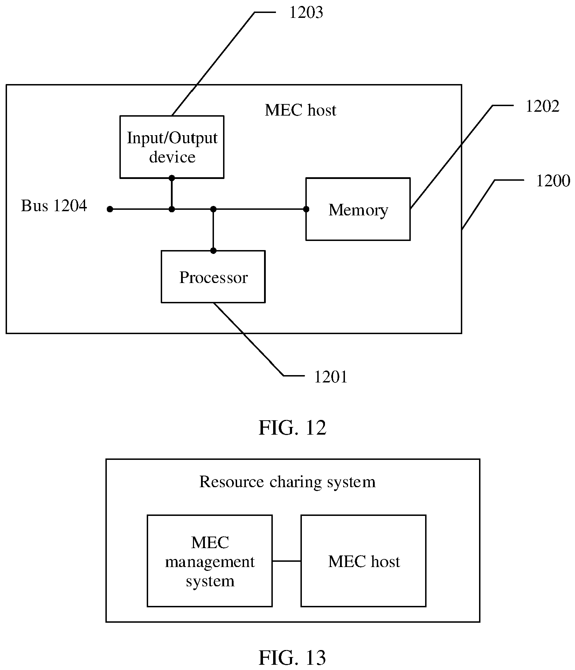

This application further provides a MEC host 1200. FIG. 12 shows an implementation of a MEC management system according to an implementation of this application. The MEC host may be configured to perform steps performed by the MEC host in the implementations shown in FIG. 2, FIG. 3, FIG. 4, FIG. 5, FIG. 6, FIG. 7, and FIG. 8. For details, refer to related description in the foregoing method implementations.

The MEC host 1200 includes a processor 1201, a memory 1202, an input/output device 1203, and a bus 1204.

In a possible implementation, the processor 1201, the memory 1202, and the input/output device 1203 are separately connected to the bus 1204, and the memory stores computer instructions.

The processor 1201 is configured to execute the computer instructions, so that the MEC host performs related method steps performed by the MEC host in the foregoing method implementations.

The processing module 1001 in the foregoing implementation may be specifically the processor 1201 in this implementation. Therefore, a specific implementation of the processor 1201 is not described again. The transceiver module 1002 in the foregoing implementation may be specifically the input/output device 1203 in this implementation.

Refer to FIG. 13. An implementation of this application further provides a resource charging system. The resource charging system includes a MEC management system and a MEC host. Specifically, the MEC management system may include the MEC management system shown in FIG. 9 and the MEC host shown in FIG. 10. The MEC management system may be configured to perform all or some of steps performed by the MEC management system in the implementations shown in FIG. 2, FIG. 3, FIG. 4, FIG. 5, FIG. 6, FIG. 7, and FIG. 8. The MEC host may be configured to perform all or some of steps performed by the MEC host in the implementations shown in FIG. 2, FIG. 3, FIG. 4, FIG. 5, FIG. 6, FIG. 7, and FIG. 8.

It may be clearly understood by a person skilled in the art that, for a purpose of convenient and brief description, for detailed working processes of the foregoing system, apparatus, and unit, refer to corresponding processes in the foregoing method implementations. Details are not described herein again.

In the several implementations provided in this application, it should be understood that the disclosed system, apparatus, and method may be implemented in another manner. For example, the described apparatus implementation is merely an example. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on a plurality of network units. A part or all of the units may be selected based on an actual requirement to achieve the objectives of the solutions of the implementations.

In addition, functional units in the implementations of this application may be integrated into one processing unit, or each of the units may exist alone physically, or two or more units are integrated into one unit. The integrated unit may be implemented in a form of hardware, or may be implemented in a form of a software function unit.

When the integrated unit is implemented in the form of a software functional unit and sold or used as an independent product, the integrated unit may be stored in a computer-readable storage medium. Based on such an understanding, the technical solutions of this application essentially, or the part contributing to the current technology, or all or some of the technical solutions may be implemented in the form of a software product. The computer software product is stored in a storage medium and includes several instructions for instructing a computer device (which may be a personal computer, a server, or a network device) to perform all or some of the steps of the methods described in the implementations of this application. The foregoing storage medium includes any medium that can store program code, such as a USB flash drive, a removable hard disk, a read-only memory (ROM, Read-Only Memory), a random access memory (RAM, Random Access Memory), a magnetic disk, or an optical disc.

The scope of protection shall be defined by the appended claims.

## Claims

1. A resource charging method, wherein the method comprises:
receiving (201), by a multi-access edge computing, MEC, management system, resource usage information of a tenant sent by a MEC host, wherein the resource usage information is information about a resource consumed by a MEC application created by the tenant through application instantiation;
during the application instantiation,
obtaining locally, by the MEC management system, a charging policy of the tenant by using an application instantiation request message of the tenant when the charging policy exists locally and otherwise receiving, by the MEC management system, a charging policy of the tenant sent by a charging policy device; and
sending (202), by the MEC management system, an indication message to the MEC host, wherein the indication message carries the charging policy of the tenant and sending
the resource usage information to the charging system device,
wherein the resource usage information is used by the charging system device to charge the resource consumed by the MEC application of the tenant;
wherein the resource usage information comprises a type of the resource, a size of the resource, a quantity of times of usage of the resource, a usage duration of the resource, a usage start time of the resource, and a usage end time of the resource;
wherein the type of the resource is a system resource or a service resource; the system resource comprises a computing resource, a network resource, and/or a storage resource consumed when the MEC application runs, and the service resource comprises an application programming interface, API, that is provided by a MEC service and that is invoked by the MEC application,
wherein the resource usage information comprises a quantity of times that the MEC application invokes the API provided by the MEC service, and the quantity of times that the API is invoked is used by the charging system device to calculate, based on a preset API usage rate, a charging amount of a service resource used by the tenant.

2. The method according to claim 1, wherein the charging policy indicates an online charging mode, the charging policy carries a usage rate of a resource used by the tenant, the usage rate is used by the MEC host to calculate a resource charging amount of the tenant, and before the receiving, by a MEC management system, resource usage information of a tenant sent by a MEC host, the method further comprises:
sending, by the MEC management system to the MEC host, a first resource charging quota that the charging system device sets for the tenant; and
the receiving, by a MEC management system, resource usage information of a tenant sent by a MEC host comprises:
when a resource charging difference between the resource charging amount of the tenant and the first resource charging quota is less than a preset threshold, receiving, by the MEC management system, the resource usage information of the tenant sent by the MEC host.

3. The method according to claim 2, wherein after the receiving, by a MEC management system, resource usage information of a tenant sent by a MEC host, the method comprises:
sending, by the MEC management system, a request message to the MEC host, wherein the request message is a message that the MEC management system requests a resource charging quota for the tenant again;
receiving, by the MEC management system, a second resource charging quota that the MEC host allocates to the tenant; and
sending, by the MEC management system, the second resource charging quota to the MEC host.

4. The method according to claim 1, wherein the charging policy indicates an offline charging mode, the charging policy carries a period in which the MEC host reports the resource usage information, and the receiving, by a MEC management system, resource usage information of a tenant sent by a MEC host comprises:
receiving, by the MEC management system based on the period, the resource usage information of the tenant sent by the MEC host.

5. A resource charging method, wherein the method comprises:
collecting, by a multi-access edge computing, MEC, host, resource usage information of a tenant, wherein the resource usage information is information about a resource consumed by a MEC application created by the tenant through application instantiation;
during the application instantiation,
receiving, by the MEC host, an indication message sent by a MEC management system, wherein the indication message carries a charging policy of the tenant, and the charging policy is used by the MEC host to report the resource usage information to the MEC management system, the charging policy being obtained locally by the MEC management system by using an application instantiation request message of the tenant
when the charging policy exists locally and otherwise the MEC management system receiving a charging policy of the tenant sent by a charging policy device; and
sending (201), by the MEC host, the resource usage information to the MEC management system, so that the MEC management system sends the resource usage information to a charging system device, and the charging system device charges the resource used by the tenant;
wherein the resource usage information comprises a type of the resource, a size of the resource, a quantity of times of usage of the resource, a usage duration of the resource, a usage start time of the resource, and a usage end time of the resource;
wherein the type of the resource is a system resource or a service resource; the system resource comprises a computing resource, a network resource, and/or a storage resource consumed when the MEC application runs, and the service resource comprises an application programming interface, API, that is provided by a MEC service and that is invoked by the MEC application,
wherein the resource usage information comprises a quantity of times that the MEC application invokes the API provided by the MEC service, and the quantity of times that the API is invoked is used by the charging system device to calculate, based on a preset API usage rate, a charging amount of a service resource used by the tenant.

6. The method according to claim 5, wherein the charging policy indicates an online charging mode, the charging policy carries a usage rate of a resource used by the tenant; before the sending, by the MEC host, the resource usage information to a MEC management system, the method further comprises:
receiving, by the MEC host, a first resource charging quota that the charging system device sets for the tenant and that is sent by the MEC management system;
calculating, by the MEC host, a resource charging amount of the tenant based on the resource usage information and the usage rate; and
comparing, by the MEC host, the resource charging amount with the first resource charging quota, to obtain a resource charging difference; and
the sending, by the MEC host, the resource usage information to a MEC management system comprises:
when the resource charging difference is less than or equal to a preset threshold, sending, by the MEC host, the resource usage information to the MEC management system.

7. The method according to claim 6, wherein after the sending, by the MEC host, the resource usage information to a MEC management system, the method further comprises:
receiving, by the MEC host, a second resource charging quota sent by the MEC management system, wherein the second resource charging quota is used by the MEC host to report the resource usage information of the tenant to the MEC management system again.

8. The method according to claim 5, wherein the charging policy indicates an offline charging mode, the charging policy carries a period in which the MEC host reports the resource usage information; and the sending, by the MEC host, the resource usage information to a MEC management system comprises:
sending, by the MEC host, the resource usage information to the MEC management system based on the period.

9. A multi-access edge computing, MEC, management system (1100), wherein the MEC management system comprises a processor (1101) configured to perform the method according to any one of claims 1 to 4.

10. A multi-access edge computing, MEC, host (1200), wherein the MEC host comprises a processor (1201) configured to perform the method according to any one of claims 5 to 8.

11. A resource charging system, wherein the resource charging system comprises the multi-access edge computing, MEC, management system according to claim 9 and the MEC host according to claim 10.

12. A computer-readable storage medium comprising instructions, wherein when the instructions are run on a computer, the computer is enabled to perform the method according to any one of claims 1 to 8.

## Patentansprüche

1. Ressourcenberechnungsverfahren, wobei das Verfahren umfasst:
Empfangen (201), durch ein Multi-Access Edge Computing(MEC)-Verwaltungssystem, von Ressourcennutzungsinformationen eines Mandanten, die durch einen MEC-Host gesendet werden, wobei die Ressourcennutzungsinformationen Informationen über eine Ressource sind, die durch eine MEC-Anwendung, die durch den Mandanten durch Anwendungsinstanziierung erstellt wird, verbraucht wird;
während der Anwendungsinstanziierung, lokales Erhalten, durch das MEC-Verwaltungssystem, einer Berechnungsrichtlinie des Mandanten durch Nutzen einer Anwendungsinstanziierungsanforderungsnachricht des Mandanten, wenn die Berechnungsrichtlinie lokal vorhanden ist, und andernfalls Empfangen, durch das MEC-Verwaltungssystem, einer Berechnungsrichtlinie des Mandanten, die durch eine Berechnungsrichtlinienvorrichtung gesendet wird; und
Senden (202), durch das MEC-Verwaltungssystem, einer Angabenachricht an den MEC-Host, wobei die Angabenachricht die Berechnungsrichtlinie des Mandanten trägt, und Senden der Ressourcennutzungsinformationen an die Berechnungssystemvorrichtung, wobei die Ressourcennutzungsinformationen durch die Berechnungssystemvorrichtung genutzt werden, um die Ressource, die durch die MEC-Anwendung des Mandanten verbraucht wird, zu berechnen;
wobei die Ressourcennutzungsinformationen eine Art der Ressource, eine Größe der Ressource, eine Häufigkeit einer Nutzung der Ressource, eine Nutzungsdauer der Ressource, eine Nutzungsstartzeit der Ressource und eine Nutzungsendzeit der Ressource umfassen;
wobei die Art der Ressource eine Systemressource oder eine Dienstressource ist;
die Systemressource eine Computerressource, eine Netzwerkressource und/oder eine Speicherressource umfasst, die verbraucht werden, wenn die MEC-Anwendung ausgeführt wird, und die Dienstressource eine Anwendungsprogrammierschnittstelle (API) umfasst, die durch einen MEC-Dienst bereitgestellt wird und durch die MEC-Anwendung aufgerufen wird,
wobei die Ressourcennutzungsinformationen eine Häufigkeit eines Aufrufens der API von der MEC-Anwendung, die durch den MEC-Dienst bereitgestellt wird, umfassen und die Häufigkeit des Aufrufens der API durch die Berechnungsgssystemvorrichtung genutzt wird, um basierend auf einer voreingestellten API-Nutzungsrate einen Berechnungsbetrag einer Dienstressource, die durch den Mandanten genutzt wird, zu kalkulieren.

2. Verfahren nach Anspruch 1, wobei die Berechnungsrichtlinie einen Online-Berechnungsmodus angibt, die Berechnungsrichtlinie eine Nutzungsrate einer Ressource, die durch den Mandanten genutzt wird, trägt, die Nutzungsrate durch den MEC-Host genutzt wird, um einen Ressourcenberechnungsbetrag des Mandanten zu kalkulieren, und vor dem Empfangen, durch ein MEC-Verwaltungssystem, von Ressourcennutzungsinformationen eines Mandanten, die durch einen MEC-Host gesendet werden, das Verfahren ferner umfasst:
Senden, durch das MEC-Verwaltungssystem an den MEC-Host, eines ersten Ressourcenberechnungskontingents, das die Berechnungssystemvorrichtung für den Mandanten festlegt; und
das Empfangen, durch ein MEC-Verwaltungssystem, von Ressourcennutzungsinformationen eines Mandanten, die durch einen MEC-Host gesendet werden, umfasst:
wenn eine Ressourcenberechnungsdifferenz zwischen dem Ressourcenberechnungsbetrag des Mandanten und dem ersten Ressourcenberechnungskontingent kleiner ist als ein voreingestellter Schwellenwert, Empfangen, durch das MEC-Verwaltungssystem, der Ressourcennutzungsinformationen des Mandanten, die durch den MEC-Host gesendet werden.

3. Verfahren nach Anspruch 2, wobei nach dem Empfangen, durch ein MEC-Verwaltungssystem, von Ressourcennutzungsinformationen eines Mandanten, die durch einen MEC-Host gesendet werden, das Verfahren umfasst:
Senden, durch das MEC-Verwaltungssystem, einer Anforderungsnachricht an den MEC-Host, wobei die Anforderungsnachricht eine Nachricht ist, dass das MEC-Verwaltungssystem erneut ein Ressourcenberechnungskontingent für den Mandanten anfordert;
Empfangen, durch das MEC-Verwaltungssystem, eines zweiten Ressourcenberechnungskontingents, das der MEC-Host dem Mandanten zuweist; und Senden, durch das MEC-Verwaltungssystem, des zweiten Ressourcenberechnungskontingents an den MEC-Host.

4. Verfahren nach Anspruch 1, wobei die Berechnungsrichtlinie einen Offline-Berechnungsmodus angibt, die Berechnungsrichtlinie einen Zeitraum trägt, in dem der MEC-Host die Ressourcennutzungsinformationen meldet, und das Empfangen, durch ein MEC-Verwaltungssystem, von Ressourcennutzungsinformationen eines Mandanten, die durch einen MEC-Host gesendet werden, umfasst:
Empfangen, durch das MEC-Verwaltungssystem basierend auf dem Zeitraum, der Ressourcennutzungsinformationen des Mandanten, die durch den MEC-Host gesendet werden.

5. Ressourcenberechnungsverfahren, wobei das Verfahren umfasst:
Sammeln, durch einen Multi-Access Edge Computing(MEC)-Host, von Ressourcennutzungsinformationen eines Mandanten, wobei die Ressourcennutzungsinformationen Informationen über eine Ressource sind, die durch eine MEC-Anwendung, die durch den Mandanten durch Anwendungsinstanziierung erstellt wird, verbraucht wird;
während der Anwendungsinstanziierung, Empfangen, durch den MEC-Host, einer Angabenachricht, die durch das MEC-Verwaltungssystem gesendet wird, wobei die Angabenachricht eine Berechnungsrichtlinie des Mandanten trägt und die Berechnungsrichtlinie durch den MEC-Host genutzt wird, um die Ressourcennutzungsinformationen an das MEC-Verwaltungssystem zu melden, wobei die Berechnungsrichtlinie durch das MEC-Verwaltungssystem durch Nutzen einer Anwendungsinstanziierungsanforderungsnachricht des Mandanten lokal erhalten wird wenn die Berechnungsrichtlinie lokal vorhanden ist und andernfalls das MEC-Verwaltungssystem eine Berechnungsrichtlinie des Mandanten, die durch eine Berechnungsrichtlinienvorrichtung gesendet wird, empfängt; und
Senden (201), durch den MEC-Host, der Ressourcennutzungsinformationen an das MEC-Verwaltungssystem, sodass das MEC-Verwaltungssystem die Ressourcennutzungsinformationen an eine Berechnungssystemvorrichtung sendet und die Berechnungssystemvorrichtung die Ressource, die durch den Mandanten genutzt wird, berechnet;
wobei die Ressourcennutzungsinformationen eine Art der Ressource, eine Größe der Ressource, eine Häufigkeit der Nutzung der Ressource, eine Nutzungsdauer der Ressource, eine Nutzungsstartzeit der Ressource und eine Nutzungsendzeit der Ressource umfassen;
wobei die Art der Ressource eine Systemressource oder eine Dienstressource ist; die Systemressource eine Computerressource, eine Netzwerkressource und/oder eine Speicherressource umfasst, die verbraucht werden, wenn die MEC-Anwendung ausgeführt wird, und die Dienstressource eine Anwendungsprogrammierschnittstelle (API) umfasst, die durch einen MEC-Dienst bereitgestellt wird und durch die MEC-Anwendung aufgerufen wird,
wobei die Ressourcennutzungsinformationen eine Häufigkeit des Aufrufens der API von der MEC-Anwendung, die durch den MEC-Dienst bereitgestellt wird, umfassen und die Häufigkeit des Aufrufens der API durch die Berechnungsgssystemvorrichtung genutzt wird, um basierend auf einer voreingestellten API-Nutzungsrate einen Berechnungsbetrag für eine Dienstressource, die durch den Mandanten genutzt wird, zu kalkulieren.

6. Verfahren nach Anspruch 5, wobei die Berechnungsrichtlinie einen Online-Berechnungsmodus angibt, die Berechnungsrichtlinie eine Nutzungsrate einer Ressource, die durch den Mandanten genutzt wird, trägt; vor dem Senden, durch den MEC-Host, der Ressourcennutzungsinformationen an ein MEC-Verwaltungssystem, das Verfahren ferner umfasst:
Empfangen, durch den MEC-Host, eines ersten Ressourcenberechnungskontingents, das die Berechnungssystemvorrichtung für den Mandanten festlegt und das durch das MEC-Verwaltungssystem gesendet wird;
Kalkulieren, durch den MEC-Host, eines Ressourcenberechnungsbetrags des Mandanten basierend auf den Ressourcennutzungsinformationen und der Nutzungsrate; und
Vergleichen, durch den MEC-Host, des Ressourcenberechnungsbetrags mit dem ersten Ressourcenberechnungskontingent, um eine Ressourcenberechnungsdifferenz zu erhalten; und
das Senden, durch den MEC-Host, der Ressourcennutzungsinformationen an ein MEC-Verwaltungssystem umfasst:
wenn die Ressourcenberechnungsdifferenz kleiner als oder gleich einem voreingestellten Schwellenwert ist, Senden, durch den MEC-Host, der Ressourcennutzungsinformationen an das MEC-Verwaltungssystem.

7. Verfahren nach Anspruch 6, wobei nach dem Senden, durch den MEC-Host, der Ressourcennutzungsinformationen an ein MEC-Verwaltungssystem, das Verfahren ferner umfasst:
Empfangen, durch den MEC-Host, eines zweiten Ressourcenberechnungskontingents, das durch das MEC-Verwaltungssystem gesendet wird, wobei das zweite Ressourcenberechnungskontingent durch den MEC-Host genutzt wird, um die Ressourcennutzungsinformationen des Mandanten erneut an das MEC-Verwaltungssystem zu melden.

8. Verfahren nach Anspruch 5, wobei die Berechnungsrichtlinie einen Offline-Berechnungsmodus angibt, die Berechnungsrichtlinie einen Zeitraum trägt, in dem der MEC-Host die Ressourcennutzungsinformationen meldet; und das Senden, durch den MEC-Host, der Ressourcennutzungsinformationen an ein MEC-Verwaltungssystem umfasst:
Senden, durch den MEC-Host, der Ressourcennutzungsinformationen an das MEC-Verwaltungssystem basierend auf dem Zeitraum.

9. Multi-Access Edge Computing(MEC)-Verwaltungssystem (1100), wobei das MEC-Verwaltungssystem einen Prozessor (1101) umfasst, der konfiguriert ist, um das Verfahren nach einem der Ansprüche 1 bis 4 durchzuführen.

10. Multi-Access Edge Computing(MEC)-Host (1200), wobei der MEC-Host einen Prozessor (1201) umfasst, der konfiguriert ist, um das Verfahren nach einem der Ansprüche 5 bis 8 durchzuführen.

11. Ressourcenberechnungssystem, wobei das Ressourcenberechnungssystem das Multi-Access Edge Computing(MEC)-Verwaltungssystem nach Anspruch 9 und den MEC-Host nach Anspruch 10 umfasst.

12. Computerlesbares Speichermedium, das Anweisungen umfasst, wobei, wenn die Anweisungen auf einem Computer ausgeführt werden, der Computer aktiviert wird, um das Verfahren nach einem der Ansprüche 1 bis 8 durchzuführen.

## Revendications

1. Procédé de facturation de ressource, dans lequel le procédé comprend :
la réception (201), par un système de gestion d'informatique en périphérie à accès multiples, MEC, d'informations sur une utilisation de ressource d'un locataire envoyées par un hôte MEC, dans lequel les informations sur une utilisation de ressource sont des informations concernant une ressource consommée par une application MEC créée par le locataire par le biais d'une instanciation d'application ;
pendant l'instanciation d'application, l'obtention localement, par le système de gestion MEC, d'une politique de facturation du locataire en utilisant un message de demande d'instanciation d'application du locataire lorsque la politique de facturation existe localement et dans le cas contraire, la réception, par le système de gestion MEC, d'une politique de facturation du locataire envoyée par un dispositif de politique de facturation ; et
l'envoi (202), par le système de gestion MEC, d'un message d'indication à l'hôte MEC, dans lequel le message d'indication contient la politique de facturation du locataire et l'envoi des informations sur une utilisation de ressource au dispositif de système de facturation,
dans lequel les informations sur une utilisation de ressource sont utilisées par le dispositif de système de facturation pour facturer la ressource consommée par l'application MEC du locataire ;
dans lequel les informations sur une utilisation de ressource comprennent un type de la ressource, une taille de la ressource, un nombre de fois où la ressource a été utilisée, une durée d'utilisation de la ressource, une heure de début d'utilisation de la ressource, et une heure de fin d'utilisation de la ressource ;
dans lequel le type de la ressource est une ressource de système ou une ressource de service ; la ressource de système comprend une ressource informatique, une ressource de réseau, et/ou une ressource de stockage consommée lors de l'exécution de l'application MEC, et la ressource de service comprend une interface de programmation d'application, API, qui est fournie par un service MEC et qui est appelée par l'application MEC,
dans lequel les informations sur une utilisation de ressource comprennent un nombre de fois où l'application MEC appelle l'API fournie par le service MEC, et le nombre de fois où l'API est appelée est utilisé par le dispositif de système de facturation pour calculer, sur la base d'un taux d'utilisation d'API prédéfini, un montant de facturation d'une ressource de service utilisée par le locataire.

2. Procédé selon la revendication 1, dans lequel la politique de facturation indique un mode de facturation en ligne, la politique de facturation contient un taux d'utilisation d'une ressource utilisée par le locataire, le taux d'utilisation est utilisé par l'hôte MEC pour calculer un montant de facturation de ressource du locataire, et avant la réception, par un système de gestion MEC, d'informations sur une utilisation de ressource d'un locataire envoyées par un hôte MEC, le procédé comprend en outre : l'envoi, par le système de gestion MEC à l'hôte MEC, d'un premier quota de facturation de ressource que le dispositif de système de facturation définit pour le locataire ; et la réception, par un système de gestion MEC, d'informations sur une utilisation de ressource d'un locataire envoyées par un hôte MEC comprend :
lorsqu'une différence de facturation de ressource entre le montant de facturation de ressource du locataire et le premier quota de facturation de ressource est inférieure à un seuil prédéfini, la réception, par le système de gestion MEC, des informations sur une utilisation de ressource du locataire envoyées par l'hôte MEC.

3. Procédé selon la revendication 2, dans lequel, après la réception, par un système de gestion MEC, d'informations sur une utilisation de ressource d'un locataire envoyées par un hôte MEC, le procédé comprend :
l'envoi, par le système de gestion MEC, d'un message de demande à l'hôte MEC, dans lequel le message de demande est un message selon lequel le système de gestion MEC demande à nouveau un quota de facturation de ressource pour le locataire ;
la réception, par le système de gestion MEC, d'un second quota de facturation de ressource que l'hôte MEC attribue au locataire ; et
l'envoi, par le système de gestion MEC, du second quota de facturation de ressource à l'hôte MEC.

4. Procédé selon la revendication 1, dans lequel la politique de facturation indique un mode de facturation hors ligne, la politique de facturation contient une période pendant laquelle l'hôte MEC signale les informations sur une utilisation de ressource, et la réception, par un système de gestion MEC, d'informations sur une utilisation de ressource d'un locataire envoyées par un hôte MEC comprend :
la réception, par le système de gestion MEC sur la base de la période, des informations sur une utilisation de ressource du locataire envoyées par l'hôte MEC.

5. Procédé de facturation de ressource, dans lequel le procédé comprend :
la collecte, par un hôte d'informatique en périphérie à accès multiples, MEC, d'informations sur une utilisation de ressource d'un locataire, dans lequel les informations sur une utilisation de ressource sont des informations concernant une ressource consommée par une application MEC créée par le locataire par le biais d'une instanciation d'application ;
pendant l'instanciation d'application, la réception, par l'hôte MEC, d'un message d'indication envoyé par un système de gestion MEC, dans lequel le message d'indication contient une politique de facturation du locataire, et la politique de facturation est utilisée par l'hôte MEC pour signaler les informations sur une utilisation de ressource au système de gestion MEC, la politique de facturation étant obtenue localement par le système de gestion MEC en utilisant un message de demande d'instanciation d'application du locataire
lorsque la politique de facturation existe localement et dans le cas contraire, le système de gestion MEC reçoit une politique de facturation du locataire envoyée par un dispositif de politique de facturation ; et
l'envoi (201), par l'hôte MEC, des informations sur une utilisation de ressource au système de gestion MEC, de sorte que le système de gestion MEC envoie les informations sur une utilisation de ressource à un dispositif de système de facturation, et que le dispositif de système de facturation facture la ressource utilisée par le locataire ;
dans lequel les informations sur une utilisation de ressource comprennent un type de la ressource, une taille de la ressource, un nombre de fois où la ressource a été utilisée, une durée d'utilisation de la ressource, une heure de début d'utilisation de la ressource, et une heure de fin d'utilisation de la ressource ;
dans lequel le type de la ressource est une ressource de système ou une ressource de service ; la ressource de système comprend une ressource informatique, une ressource de réseau, et/ou une ressource de stockage consommée lors de l'exécution de l'application MEC, et la ressource de service comprend une interface de programmation d'application, APl, qui est fournie par un service MEC et qui est appelée par l'application MEC,
dans lequel les informations sur une utilisation de ressource comprennent un nombre de fois où l'application MEC appelle l'API fournie par le service MEC, et le nombre de fois où l'API est appelée est utilisé par le dispositif de système de facturation pour calculer, sur la base d'un taux d'utilisation d'API prédéfini, un montant de facturation d'une ressource de service utilisée par le locataire.

6. Procédé selon la revendication 5, dans lequel la politique de facturation indique un mode de facturation en ligne, la politique de facturation contient un taux d'utilisation d'une ressource utilisée par le locataire ; avant l'envoi, par l'hôte MEC, des informations sur une utilisation de ressource à un système de gestion MEC, le procédé comprend en outre :
la réception, par l'hôte MEC, d'un premier quota de facturation de ressource que le dispositif de système de facturation définit pour le locataire et qui est envoyé par le système de gestion MEC ;
le calcul, par l'hôte MEC, d'un montant de facturation de ressource du locataire sur la base des informations sur une utilisation de ressource et du taux d'utilisation ; et
la comparaison, par l'hôte MEC, du montant de facturation de ressource avec le premier quota de facturation de ressource, pour obtenir une différence de facturation de ressource ; et
l'envoi, par l'hôte MEC, des informations sur une utilisation de ressource à un système de gestion MEC comprend :
lorsque la différence de facturation de ressource est inférieure ou égale à un seuil prédéfini, l'envoi, par l'hôte MEC, des informations sur une utilisation de ressource au système de gestion MEC.

7. Procédé selon la revendication 6, dans lequel après l'envoi, par l'hôte MEC, des informations sur une utilisation de ressource à un système de gestion MEC, le procédé comprend en outre : la réception, par l'hôte MEC, d'un second quota de facturation de ressource envoyé par le système de gestion MEC, dans lequel le second quota de facturation de ressource est utilisé par l'hôte MEC pour signaler à nouveau au système de gestion MEC les informations sur une utilisation de ressource du locataire.

8. Procédé selon la revendication 5, dans lequel la politique de facturation indique un mode de facturation hors ligne, la politique de facturation contient une période pendant laquelle l'hôte MEC signale les informations sur une utilisation de ressource ; et l'envoi, par l'hôte MEC, des informations sur une utilisation de ressource à un système de gestion MEC comprend :
l'envoi, par l'hôte MEC, des informations sur une utilisation de ressource au système de gestion MEC sur la base de la période.

9. Système de gestion d'informatique en périphérie à accès multiples, MEC (1100), dans lequel le système de gestion MEC comprend un processeur (1101) configuré pour réaliser le procédé selon l'une quelconque des revendications 1 à 4.

10. Hôte d'informatique en périphérie à accès multiples, MEC (1200), dans lequel l'hôte MEC comprend un processeur (1201) configuré pour réaliser le procédé selon l'une quelconque des revendications 5 à 8.

11. Système de facturation de ressource, dans lequel le système de facturation de ressource comprend le système de gestion d'informatique en périphérie à accès multiples, MEC, selon la revendication 9 et l'hôte MEC selon la revendication 10.

12. Support de stockage lisible par ordinateur comprenant des instructions, dans lequel, lorsque les instructions sont exécutées sur un ordinateur, l'ordinateur est en mesure de réaliser le procédé selon l'une quelconque des revendications 1 à 8.
